# EUROPÄISCHE PATENTSCHRIFT

(11) **EP 3 310 595 B1**
(45) Veröffentlichungstag und Bekanntmachung des Hinweises auf die Patenterteilung: **13.03.2019**
(21) Anmeldenummer: 16727624.5
(22) Anmeldetag: 31.05.2016
(51) Int. Cl.: B60G 17/0165, B60G 17/018, G01C 21/00, B60W 30/02, B60W 40/06

(54) **VERFAHREN ZUM EFFIZIENTEN ÜBERTRAGEN EINES STRASSENHÖHENPROFILS**
METHOD FOR EFFICIENTLY TRANSMITTING A ROAD-SURFACE CONTOUR PROFILE
PROCÉDÉ DE TRANSMISSION EFFICACE D'UN PROFIL DE HAUTEUR D'UNE ROUTE

(30) Priorität: 16.06.2015 DE 102015007670
(43) Veröffentlichungstag der Anmeldung: 25.04.2018
(73) Patentinhaber: Audi AG, 85045 Ingolstadt (DE)
(72) Erfinder: NOLL, Andreas, 92342 Freystadt (DE); KLEICKMANN, Bodo, 85049 Ingolstadt (DE)
(86) Internationale Anmeldenummer: PCT/EP2016/000885
(87) Internationale Veröffentlichungsnummer: WO 2016/202428

(56) Entgegenhaltungen:
- EP-A2- 1 449 688
- DE-A1- 10 344 053
- DE-A1-102005 050 540
- DE-A1-102007 030 839
- DE-A1-102013 016 974
- JP-A- 2006 123 587
- US-A1- 2005 090 956
- US-A1- 2012 203 428
- US-B1- 6 763 292

## Beschreibung

Die Erfindung betrifft ein Verfahren zum Übertragen eines Höhenprofils einer Straße an ein Fahrzeug.

Moderne Fahrzeuge weisen eine Vielzahl an Unterstützungssystemen zur Erhöhung der Sicherheit und des Fahrkomforts auf. Ein die Sicherheit und den Fahrkomfort beeinflussendes System ist die Federung des Fahrzeugs. Die Federung ist Teil des Fahrwerks. Durch die Federung wird erreicht, dass Bodenunebenheiten nicht direkt auf das Fahrzeug übertragen werden, sondern ein Reifen des Fahrzeugs diesen Bodenunebenheiten folgt und Bodenkontakt mit der Straße hält. Ausreichender Bodenkontakt bzw. ausreichende Bodenhaftung ist für die Sicherheit des Fahrzeugs und seiner Insassen entscheidend.

Zum Ausgleich der auf die Federung übertragenen Bewegungen weist die Federung Stoßdämpfer auf, die ein Schaukeln des Fahrzeugs verhindern. Über die Zeit haben sich Fahrwerkssysteme etabliert, die aktiv in den Zustand eines Teilsystems eingreifen können. Aktive Federsysteme erzeugen zusätzliche Kräfte bzw. Bewegungen, um noch besser Bodenkontakt zu halten und aufschaukelnde Karosseriebewegungen zu unterdrücken.

Da die Federung auf Bodenunebenheiten lediglich reagiert, gehen aktuelle Überlegungen in die Richtung zu vorhersagenden Fahrwerksystemen. Solche Systeme nutzen Informationen, die zentral oder dezentral abgespeichert sind, um eine Vorhersage für bevorstehende Ereignisse treffen zu können, und das Fahrwerk dahingehend anzupassen. Dazu ist es notwendig, dass Informationen über den Straßenverlauf und/oder den Straßenzustand dem System bereitgestellt werden.

Aufgrund der vielen im Fahrzeug vorhandenen und miteinander vernetzten Systeme, nimmt eine Datenmenge, die im Fahrzeug übertragen werden muss, weiter zu. Die Datenmenge wird noch größer, wenn das Fahrzeug über Funknetzwerke mit externen Servern kommunizieren möchte, um bspw. persönliche Daten aus einem sogenannten Cloud-Dienst an das Fahrzeug zu übertragen, oder um Navigationsdaten eines Navigationssystems zu übertragen. Darüber hinaus werden auch immer mehr Daten an das Fahrzeug übermittelt, die dem Fahrer nicht direkt zur Verfügung stehen, sondern von verschiedenen Fahrzeugfunktionen genutzt werden, um den Fahrkomfort und die Sicherheit zu steigern. In diese Kategorie fallen bspw. eine Schildererkennung oder eine Straßenzustandsermittlung.
Systeme zur Ermittlung von Straßenzuständen werden in der US 2012/0203428 A1 und der US 6,763,292 B1 beschrieben. Weitere relevante Verfahren und Systeme sind aus die DE10 2013 016 974 A1, DE10 2007 030 839 A1, DE10 2005 050 540 A1 und DE 103 44 053 A1 bekannt.

Informationen über den Straßenzustand stehen bspw. über verschiedene Dienste und Plattformen über das Internet zur Verfügung. Es ist absehbar, dass weitere Funktionen im Fahrzeug hinzukommen, die mit dem Internet kommunizieren. Daher wird nach einer Möglichkeit gesucht, die großen Mengen an Daten, die auf Servern im Internet gespeichert sind, zu selektieren und abhängig von der Datenverbindung zwischen dem Server und dem Fahrzeug zu begrenzen.
Es wird daher ein Verfahren zum Übertragen von Informationen zwischen einem Fahrzeug und einem Server mit den Merkmalen des Anspruchs 1 vorgeschlagen. Weiterhin wird ein Fahrwerksystem mit den Merkmalen des Anspruchs 7 und ein Fahrzeug mit den Merkmalen des Anspruchs 11 vorgeschlagen.

Weitere Ausgestaltungen ergeben sich aus der Beschreibung und den abhängigen Unteransprüchen.

Erfindungsgemäß wird ein Verfahren zur Übertragung von Informationen zwischen einem Fahrzeug und einem fahrzeugexternen Server vorgeschlagen, bei dem ein Höhenprofil einer von dem Fahrzeug zu überfahrenden Straße, das auf dem Server hinterlegt ist, von dem Fahrzeug über eine Fahrzeug-Server-Schnittstelle abgerufen wird, wobei Höhenwerte des vor dem Fahrzeug liegenden Straßenhöhenprofils von dem Server zu dem Fahrzeug zyklisch, d.h. in einem festzulegenden zeitlichen Abstand übermittelt werden, wobei pro Zyklus ein Höhenwert übertragen wird, der in einem geschwindigkeitsabhängigen Abstand vor dem Fahrzeug liegt.

In einer Ausführungsform des erfindungsgemäßen Verfahrens, weist das Fahrzeug eine linke und eine rechte Fahrspur auf und ein zu übermittelnder Höhenwert von dem Server an das Fahrzeug umfasst jeweils einen Wert für die linke Fahrspur und einen Wert für die rechte Fahrspur des Fahrzeugs.

In einer weiteren Ausführungsform des erfindungsgemäßen Verfahrens erzeugt eine Mehrzahl an übermittelten Höhenwerten ein Höhenprofil für jeweils die linke und die rechte Fahrspur des Fahrzeugs.

In noch einer weiteren Ausführungsform des erfindungsgemäßen Verfahrens werden die übermittelten Höhenwerte an eine Steuereinheit des Fahrzeugs übergeben, das die Höhenwerte verarbeitet und ein Fahrwerk des Fahrzeugs an das entsprechend zu erwartende Höhenprofil anpasst.

In einer Ausführungsform des erfindungsgemäßen Verfahrens werden Stabilisations- und/oder Dämpfungseigenschaften des Fahrzeugs bzw. des Fahrwerks angepasst.

In einer weiteren Ausführungsform des erfindungsgemäßen Verfahrens wird von dem Fahrzeug bzw. dem Fahrwerk das überfahrene Höhenprofil ermittelt und Höhenwerte für jeweils die linke Fahrspur und die rechte Fahrspur an den fahrzeugexternen Server übermittelt.

Weiterhin wird erfindungsgemäß ein Fahrwerksystem eines Fahrzeugs mit einer Steuereinheit vorgeschlagen, die dazu konfiguriert ist, zyklisch, d.h. in einem festzulegenden zeitlichen Abstand über eine Fahrzeug-Server-Schnittstelle Anfragen an einen fahrzeugexternen Server zu senden, der Höhenwerte eines Straßenprofils einer von dem Fahrzeug zu überfahrenden Straße bereitstellt, wobei Höhenwerte des vor dem Fahrzeug liegenden Straßenhöhenprofils in Reaktion auf die zyklische Anfrage von dem Server zu dem Fahrzeug entsprechend zyklisch übermittelt werden, wobei pro Zyklus ein Höhenwert übertragen wird.

In einer Ausführungsform des erfindungsgemäßen Fahrwerksystems umfasst der Höhenwert jeweils einen Wert für eine linke Fahrspur und eine rechte Fahrspur des Fahrzeugs.

In einer weiteren Ausführungsform des erfindungsgemäßen Fahrwerksystems weist das Fahrwerksystem eine Regeleinheit auf, die dazu konfiguriert ist, die empfangenen Höhenwerte zu verarbeiten und entsprechend die Stabilisations- und/oder Dämpfungseigenschaften des Fahrwerks anzupassen.

In noch einer weiteren Ausführungsform des erfindungsgemäßen Fahrwerksystems weist jede Spur mindestens einen Sensor auf, der dazu konfiguriert sind, ein von mindestens einem Reifen der Spur des Fahrzeugs überfahrenes Höhenprofil zu messen und die gemessenen Höhenwerte an den Server zu übermitteln.

Erfindungsgemäß wird auch ein Fahrzeug mit einem erfindungsgemäßen Fahrwerksystem, das dazu ausgelegt, ist ein erfindungsgemäßes Verfahren auszuführen, vorgeschlagen.

Es versteht sich, dass die voranstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt in geteilter Darstellung ein Höhenprofil und zu übertragende Höhenwerte bei zwei voneinander verschiedenen Geschwindigkeiten.
Figur 2 zeigt eine schematische Ansicht von an einer Ausführungsform des erfindungsgemäßen Verfahrens beteiligten Einrichtungen.

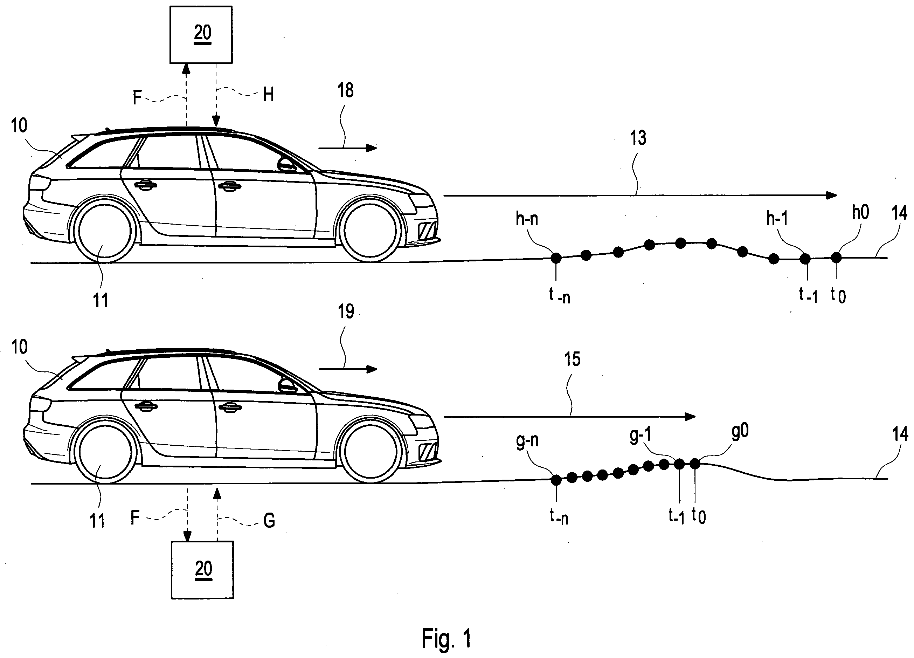

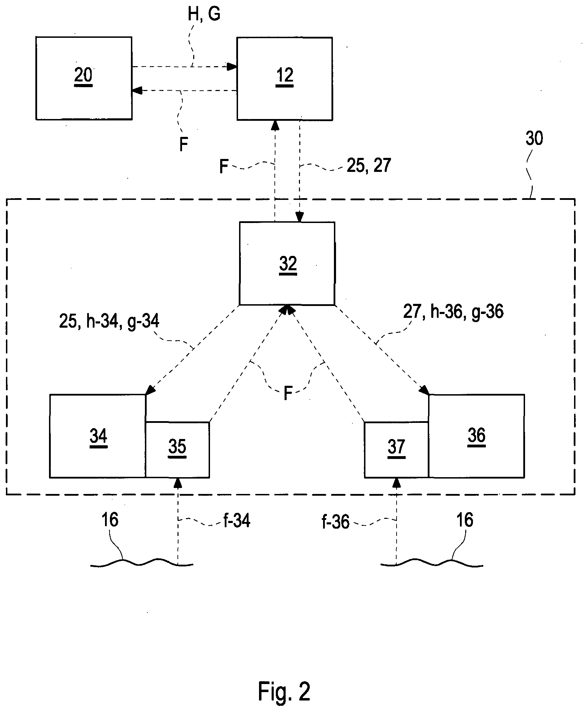

Unter Bezugnahme auf die Figuren 1 und 2 soll das der Erfindung zugrundeliegende Prinzip erläutert werden. Durch eine gezielte Fahrzeugvernetzung an ein globales Serversystem 20, ist es möglich, ein Straßenhöhenprofil 14 zwischen einem Fahrzeug 10 und einem Server 20 zu übermitteln. Die Informationen des Straßenhöhenprofils 14 werden den im Fahrzeug 10 vorhandenen Vertikaldynamiksystemen zur Verfügung gestellt, die auf Basis der erhaltenen Informationen ein Fahrwerk 30 (siehe Figur 2) anpassen und eine gezielte Komfortsteigerung generieren. Ziel ist es, eine effiziente Übertragung von Informationen über das Straßenhöhenprofil 14 zwischen dem Fahrzeug 10 und dem Server 20 zu gewährleisten. Eine effiziente Übertragung soll die Datenmenge gezielt auf ein Minimum beschränken und sicherstellen, dass auch in signalschwachen (bspw. auf ländlichen Straßen, usw.) und/oder abgeschirmten Bereichen (bspw. durch Tunnel, Häuserwände, usw.) ein zufriedenstellendes Höhenprofil übermittelt werden kann.

In Figur 1 ist die Auflösung der übermittelten Höhenwerte H bei zwei unterschiedlichen Geschwindigkeiten 18, 19 (jeweils durch Pfeil gekennzeichnet) dargestellt. Im oberen Teil der Figur 1 bewegt sich das Fahrzeug 10 mit der Geschwindigkeit 18 über das Straßenhöhenprofil 14. Zu diesem Zeitpunkt t0 empfängt das Fahrzeug 10 den Höhenwert h0. Der Höhenwert h0 ist der Höhenwert, den das Fahrzeug 10 in bspw. 1 Sekunde überfahren wird und der somit in einem entsprechenden zeitlich definierten Abstand 13 vor dem Fahrzeug 10 liegt. Zuvor hat das Fahrzeug bereits die Höhenwerte h-1 bis h-n empfangen. Die Gesamtheit der empfangenen Höhenwerte h0, h-1, ... , h-n erzeugt ein Straßenhöhenprofil h-34, h-36 (Figur 2) für jeweils eine linke und eine rechte Fahrspur des Fahrzeugs.

Im unteren Teil der Figur 1 bewegt sich das Fahrzeug 10 mit der Geschwindigkeit 19, die bspw. die Hälfte der Geschwindigkeit 18 entspricht, über das Straßenhöhenprofil 14. Zu diesem Zeitpunkt empfängt das Fahrzeug 10 den Höhenwert g0. Der Höhenwert g0 ist der Höhenwert, den das Fahrzeug 10 in 1 Sekunde überfahren wird und der somit in einem entsprechenden Abstand 15 vor dem Fahrzeug 10 liegt. Zuvor hat das Fahrzeug bereits die Höhenwerte g-1 bis g-n empfangen. Die Gesamtheit der empfangenen Höhenwerte g0, g-1, ... , g-n erzeugt ein Straßenhöhenprofil g-34, g-36 (Figur 2) für jeweils die linke und die rechte Fahrspur des Fahrzeugs. Da die Geschwindigkeit 19 niedriger ist, ein Zeitabstand, in dem die Anfragen an den Server 20 erfolgen, in diesem Beispiel jedoch gleich geblieben ist, liegen die übermittelten Höhenwerte g0, g-1, g-n enger beieinander als im oberen Teil der Figur 1. Der räumliche Abstand zweier benachbarter Höhenwerte berechnet sich aus der Fahrzeuggeschwindigkeit 18, 19 und der Zeit zwischen zwei Abfragen. Dementsprechend ist bei niedrigerer Geschwindigkeit 19 die Auflösung des fahrzeugseitigen Höhenprofils höher, da die Höhenwerte enger beieinander liegen. In anderen Worten kann daher bei niedrigerer Geschwindigkeit 19, die Zeit zwischen zwei Abfragen der Steuereinheit 32 erhöht bzw. bei höherer Geschwindigkeit 18 erniedrigt werden.

Der Abstand 13, 15 des Höhenwertes H, G von der aktuellen Position des Fahrzeugs ist geschwindigkeitsabhängig. Der Abstand 13, 15 des angefragten und übermittelten Höhenwertes H, G betrifft den Höhenwert, den das Fahrzeug 10 mit der aktuellen Geschwindigkeit 18, 19 bspw. 1 Sekunde später überfahren wird. Daraus ergibt sich der räumliche Abstand 13, 15 des angefragten Höhenwertes H, G aus der Zeit, nach welcher der angefragte Höhenwert H, G von dem Fahrzeug 10 erreicht werden soll und der aktuellen Fahrzeuggeschwindigkeit. Ist der räumliche Abstand 13, 15 vor dem Fahrzeug 10 zu hoch bzw. zu niedrig, kann der zeitliche Abstand des angefragten und übermittelten Höhenwertes H, G erniedrigt bzw. erhöht werden. Wenn der Höhenwert H, G, den das Fahrzeug in bspw. 1 Sekunde überfahren wird, einen festzulegenden Wert übersteigt, kann der zeitliche Abstand erniedrigt werden, so dass ein Höhenwert H, G angefragt wird, der den Ort betrifft, den das Fahrzeug in nunmehr 0,5 Sekunden überfahren wird. Gleiches gilt, falls der räumliche Abstand 13, 15 zu gering wird, so dass dann der zeitliche Abstand erhöht wird.

Während das Fahrzeug 10 das Straßenprofil 14 überfährt, messen Sensoren 35, 37 (Figur 2) das tatsächlich überfahrene Höhenprofil 16 (Figur 2) und übermitteln das gemessene Höhenprofil F an den Server 20, um die Qualität des hinterlegten Höhenprofils zu verbessern.

Das mit dem erfindungsgemäßen Verfahren fahrzeugseitig erzeugte Straßenhöhenprofil F, f-34, f-36 zeichnet sich durch eine geschwindigkeitsabhängige Abtastung bei gleichzeitig konstanter zeitlicher Bandbreite der Kommunikationsschnittstelle bzw. Fahrzeug-Server-Schnittstelle 12 aus. Daher kann die Auflösung des Straßenhöhenprofils 14 auf dem Server 20 deutlich höher ausfallen und es kann dennoch ein Höhenwert H, G in einer geschwindigkeitsabhängigen Auflösung vor dem Fahrzeug 10 übertragen werden. Der Server 20 ist dazu ausgebildet, von einer Vielzahl von Fahrzeugen 10, die am Verkehr teilnehmen, ein tatsächlich überfahrenes Höhenprofil der Straße zu empfangen. Daher liegen für das Straßenprofil 14 eine hohe Dichte an diskreten Höhenwerten H, G des Straßenprofils 14 vor. Ein Fahrzeug 10, das über ein Straßenprofil 14 mit einer Geschwindigkeit 18, 19 von bspw. 60 Kilometer pro Stunde fährt und alle 5 Millisekunden eine Anfrage an den Server 20 stellt, legt in diesen 5 Millisekunden eine Strecke von 8,3 Millimetern zurück. Eine Auflösung von 8,3 mm auf dem Server 20 wäre somit ausreichend, um die Anfragen des Fahrzeugs 10 zu bedienen. Jedoch ist es vorgesehen, dass die Auflösung auf dem Server 20 deutlich höher sein kann, also Daten bzw. Höhenwerte H, G in geringeren Abständen als 8,3 mm hinterlegt sind. Es sei angemerkt, dass sowohl ein kontinuierliches Straßenprofil 14 hinterlegt sein kann, als auch lediglich diskrete Höhenwerte H.

Wie in Figur 2 gezeigt, weist das Fahrwerk 30 des Fahrzeugs 10 eine Fahrzeug-Server-Schnittstelle 12 und eine Steuereinheit 32 des Fahrwerks 30 auf. Die Steuereinheit 32 arbeitet in einem Zyklus. Ein Zyklus umfasst das Berechnen eines Ortes, der vor dem Fahrzeug 10 liegt, von dem ein Höhenwert H, G abgefragt werden soll, das Senden der Anfrage an die Fahrzeug-Server-Schnittstelle 12 bzw. den Server 20, das Empfangen des Höhenwertes 25, 27, und ggf. das Übermitteln eines tatsächlich überfahrenen Höhenprofils F an die Fahrzeug-Server-Schnittstelle 12 bzw. den Server 20.

Während eines Zyklus wird ein Ort des Straßenprofils 14, den das Fahrzeug 10 mit der aktuellen Geschwindigkeit 18, 19 in bspw. 1 Sekunde überfahren wird, berechnet. Diese Information wird an die Fahrzeug-Server-Schnittstelle 12 übermittelt, die dann eine Abfrage zur Übermittlung des Höhenwertes H an dem berechneten Ort an den Server 20 sendet. Der Server 20 übermittelt den angefragten Höhenwert H an die Fahrzeug-Server-Schnittstelle 12. Der Höhenwert H umfasst einen linken Höhenwert 25 und einen rechten Höhenwert 27 für jeweils die linke bzw. die rechte Fahrspur 34, 36 des Fahrzeugs 10. Die Steuereinheit 32 empfängt die Höhenwerte 25, 27, und leitet sie an die jeweiligen Regelsysteme der Fahrspuren 34, 36 weiter. Daraufhin kann die Federung der Fahrspuren 34, 36 an den Höhenwert 25, 27 angepasst werden.

Pro Zyklus wird ein Höhenwert 25 für die linke Fahrspur 34 des Fahrzeugs 10 und ein Höhenwert 27 für die rechte Fahrspur 36 des Fahrzeugs 10 übermittelt. Die von der Steuereinheit 32 über die Zeit empfangenen Höhenwerte 25, 27 erzeugen ein eindeutiges Abbild h-34, h-36 des Straßenhöhenprofils 14 für die linke und die rechte Fahrspur 34, 36 des Fahrzeugs 10 vor dem Fahrzeug 10. Das in dem Fahrzeug 10 von der Steuereinheit 32 erzeugte Straßenhöhenprofil h-34, h-36 unterscheidet sich von dem auf dem Server 20 hinterlegten Straßenhöhenprofil 14, da die Auflösung, also wie nah zwei Höhenwerte H beieinander liegen, von der Fahrzeuggeschwindigkeit 18, 19 und der Zeit, die zwischen zwei Abfragen der Steuereinheit 32 liegt, abhängig ist (siehe Figur 1). Wie bereits erwähnt, kann auch die Zykluszeit in Abhängigkeit von der Geschwindigkeit 18, 19 verändert werden.

Während des Überfahrens der Straße, erfassen Sensoren 35, 37 des Fahrwerks 30 jeweils für die linke bzw. rechte Fahrspur 34, 36 das tatsächlich überfahrene Höhenprofil 16 der Straße. Das über die Sensoren 35, 37 erfasste Straßenhöhenprofil F wird mit den von dem Server 20 empfangenen Daten abgeglichen, fusioniert und an den Server zurückgesendet. So kann die Qualität des Straßenhöhenprofils 14 verbessert werden.

Dieser Zyklus wird in sehr kurzen Zeitabständen wiederholt. Die Zykluszeit, also die Zeit zwischen zwei Anfragen an den Server 20, kann jedoch geschwindigkeitsabhängig sein. Bei höheren Geschwindigkeiten 18 kann die Zykluszeit auf einen geringen Wert, wie beispielsweise auf 5 Millisekunden eingestellt werden. Bei einer niedrigeren Geschwindigkeit 19 kann ein Wert von beispielsweise 15 Millisekunden ausreichend sein.

Im Rahmen der Erfindung ist auch der Fall enthalten, dass die Steuereinheit 32 die Aufgaben der Fahrzeug-Server-Schnittstelle 12 übernimmt und umgekehrt.

Heutige Telekommunikationssysteme, wie bspw. LTE, erlauben maximale Datenraten von bis zu 300 Megabits pro Sekunde (MBit/s) und sind in der Lage die für das erfindungsgemäße Verfahren notwendige Datenmenge zu übertragen. Wie erwähnt kann jedoch in ländlichen Regionen oder bei abgeschirmten Verhältnissen, diese Datenrate auf einen geringen Prozentsatz davon reduziert sein. Das erfindungsgemäße Verfahren benötigt zum Übertragen eines Straßenhöhenprofils für die linke und die rechte Fahrspur eine Datenrate von ca. 0.0008 MBit/s und ist daher dazu geeignet, auch bei geringer Datenrate zuverlässig die Höhenwerte h zu übertragen.

## Patentansprüche

1. Verfahren zur Übertragung von Informationen zwischen einem Fahrzeug (10) und einem fahrzeugexternen Server (20), bei dem ein Höhenprofil (14) einer von dem Fahrzeug (10) zu überfahrenden Straße, das auf dem Server (20) hinterlegt ist, von dem Fahrzeug (10) über eine Fahrzeug-Server-Schnittstelle (12) abgerufen wird, wobei Höhenwerte (H, G) des vor dem Fahrzeug (10) liegenden Straßenhöhenprofils (14) von dem Server (20) zu dem Fahrzeug (10) zyklisch, in einem festzulegenden zeitlichen Abstand (13, 15) übermittelt werden, wobei pro Zyklus ein Höhenwert (H, G) übertragen wird, der in einem geschwindigkeitsabhängigen Abstand (13, 15) vor dem Fahrzeug (10) liegt, so dass die Zeit zwischen zwei Abfragen der Steuereinheit bei niedrigerer Geschwindigkeit erhöht bzw. bei höherer Geschwindigkeit erniedrigt werden kann.

2. Verfahren nach Anspruch 1, bei dem das Fahrzeug (10) eine linke und eine rechte Fahrspur (34, 36) aufweist und ein zu übermittelnder Höhenwert (H, G) von dem Server (20) an das Fahrzeug (10) jeweils einen linken Höhenwert (25) für die linke Fahrspur (34) und einen rechten Höhenwert (27) für die rechte Fahrspur (36) des Fahrzeugs (10) umfasst.

3. Verfahren nach Anspruch 2, bei dem eine Mehrzahl an übermittelten Höhenwerten (H, G) ein Höhenprofil (h-34, h-36) für jeweils die linke und die rechte Fahrspur (34, 36) des Fahrzeugs (10) erzeugen.

4. Verfahren nach einem der voranstehenden Ansprüche, bei dem die übermittelten Höhenwerte (H, G) an eine Steuereinheit (32) des Fahrzeugs übergeben werden, das die Höhenwerte (H, G) verarbeitet und ein Fahrwerk (30) des Fahrzeugs (10) an das entsprechend zu erwartende Höhenprofil (14) anpasst.

5. Verfahren nach Anspruch 4, bei dem Stabilisations- und/oder Dämpfungseigenschaften des Fahrzeugs (10) bzw. des Fahrwerks (30) angepasst werden.

6. Verfahren nach einem der voranstehenden Ansprüche, bei dem von dem Fahrzeug (10) das überfahrene Höhenprofil (16) ermittelt wird und Höhenwerte (f-34, f-36, F) für jeweils die linke Fahrspur (34) und die rechte Fahrspur (36) an den fahrzeugexternen Server (20) übermittelt werden.

7. Verfahren nach einem der voranstehenden Ansprüche, bei dem die Zykluszeit, die zwischen zwei Anfragen an den Server (20) liegt, abhängig von der Geschwindigkeit (18, 19) des Fahrzeugs (10) angepasst wird.

8. Fahrwerksystem (30) eines Fahrzeugs (10) mit einer Steuereinheit (32), die dazu konfiguriert ist, in einem festzulegendem zeitlichem Abstand (13, 15) über eine Fahrzeug-Server-Schnittstelle (12) Anfragen an einen fahrzeugexternen Server (20) zu senden, der Höhenwerte (H, G) eines Straßenprofils (14) einer von dem Fahrzeug (10) zu überfahrenden Straße bereitstellt, wobei Höhenwerte (H, G) des vor dem Fahrzeug (10) liegenden Straßenhöhenprofils (14) von dem Server (20) zu dem Fahrzeug (10) zyklisch, in dem festzulegenden zeitlichen Abstand (13, 15) übermittelt werden, wobei pro Zyklus ein Höhenwert (H, G) übertragen wird, der in einem geschwindigkeitsabhängigen Abstand (13, 15) vor dem Fahrzeug (10) liegt, so dass die Zeit zwischen zwei Abfragen der Steuereinheit an den Server bei niedrigerer Geschwindigkeit erhöht bzw. bei höherer Geschwindigkeit erniedrigt werden kann.

9. Fahrwerksystem (30) nach Anspruch 8, wobei der Höhenwert (H, G) jeweils einen linken Höhenwert (25) für eine linke Fahrspur (34) und einen rechten Höhenwert (27) eine rechte Fahrspur (36) umfasst.

10. Fahrwerksystem (30) nach Anspruch 8 oder 9, bei dem die Steuereinheit (32) dazu konfiguriert ist, die empfangenen Höhenwerte (H, 25, 27) zu verarbeiten und entsprechend die Stabilisations- und/oder Dämpfungseigenschaften des Fahrwerks (30) anzupassen.

11. Fahrwerksystem (30) nach einem der Ansprüche 8 bis 10, das für jede Spur (34, 36) mindestens einen Sensor (35, 37) aufweist, der dazu konfiguriert sind, ein von mindestens einem Reifen (11) der jeweiligen Spur (34, 36) des Fahrzeugs (10) überfahrenes Höhenprofil (16) zu messen und die gemessenen Höhenwerte (f-34, f-36, F) an den Server (20) zu übermitteln.

12. Fahrzeug (10) mit einem Fahrwerksystem (30) der Ansprüche 8 bis 11, das dazu ausgelegt ist, ein Verfahren nach den Ansprüchen 1 bis 7 auszuführen.

## Claims

1. Method for transmitting information between a vehicle (10) and a server (20) external to the vehicle, in which a contour profile (14) of a road to be traversed by the vehicle (10), which is stored on the server (20), is retrieved by the vehicle (10) via a vehicle-server-interface (12), wherein height values (H, G) of the road-surface contour profile (14) lying in front of the vehicle (10) are transmitted by the server (20) to the vehicle (10) cyclically at a time interval (13, 15) to be fixed, wherein per cycle a contour value (H, G) is transmitted which lies at an interval (13, 15), depending on speed, in front of the vehicle (10) such that the time between two requests of the control unit can be raised at lower speed or decreased at higher speed.

2. Method according to claim 1, in which the vehicle (10) has a left and a right driving track (34, 36) and a contour value (H, G) to be transmitted from the server (20) to the vehicle (10) comprises respectively a left contour value (25) for the left driving track (34) and a right contour value (27) for the right driving track (36) of the vehicle (10).

3. Method according to claim 2, in which a plurality of transmitted contour values (H, G) generate a contour profile (h-34, h-36) for respectively the left and the right driving track (34, 36) of the vehicle (10).

4. Method according to any of the preceding claims, in which the transmitted contour values (H, G) are passed to a control unit (32) of the vehicle which processes the contour values (H, G) and adapts a chassis (30) of the vehicle (10) to the contour profile (14) correspondingly to be expected.

5. Method according to claim 4, in which stabilisation and/or damping characteristics of the vehicle (10) or of the chassis (30) are adapted.

6. Method according to any of the preceding claims, in which the traversed contour profile (16) is detected by the vehicle (10) and contour values (f-34, f-36, F) for respectively the left driving track (34) and the right driving track (36) are transmitted to the server (20) external to the vehicle.

7. Method according to any of the preceding claims, in which the cycle time which lies between two requests to the server (20) is adapted depending on the speed (18, 19) of the vehicle (10).

8. Chassis system (30) of a vehicle (10) having a control unit (32) which is configured at a time interval (13, 15) which is to be fixed to send via a vehicle-server-interface (12) requests to a server (20) external to the vehicle, which provides contour values (H, G) of a road profile (14) of a road to be traversed by the vehicle (10), wherein contour values (H, G) of the road contour profile (14) lying in front of the vehicle (10) are transmitted cyclically, at the time interval (13, 15) to be fixed, from the server (20) to the vehicle (10), wherein per cycle one contour value (H, G) is transmitted which lies at an interval (13, 15), depending on the speed, in front of the vehicle (10), such that the time between two requests of the control unit to the server can be increased at lower speed or decreased at higher speed.

9. Chassis system (30) according to claim 8, wherein the contour value (H, G) comprises respectively a left contour value (25) for a left driving track (34) and a right contour value (27) a right driving track (36).

10. Chassis system (30) according to claim 8 or 9, in which the control unit (32) is configured to process the received contour values (H, 25, 27) and to adapt accordingly the stabilisation and/or damping characteristics of the chassis (30).

11. Chassis system (30) according to any of claims 8 to 10, which has for each track (34, 36) at least one sensor (35, 37) which are configured to measure a contour profile (16) traversed by at least one tire (11) of the respective track (34, 36) of the vehicle (10) and to transmit the measured contour values (f-34, f-36, F) to the server (20).

12. Vehicle (10) having a chassis system (30) of claims 8 to 11 which is configured to carry out a method according to claims 1 to 7.

## Revendications

1. Procédé de transfert d'informations entre un véhicule (10) et un serveur (20) extérieur au véhicule, dans lequel un profil de hauteur (14) d'une route à parcourir par le véhicule (10), qui est mémorisé sur le serveur (20), est interrogé par le véhicule (10) via une interface véhicule-serveur (12), dans lequel des valeurs de hauteur (H, G) du profil de hauteur de route (14) se trouvant devant le véhicule (10) sont transmises par le serveur (20) au véhicule (10) de manière cyclique dans un intervalle de temps (13, 15) à établir, dans lequel est transférée par cycle une valeur de hauteur (H, G) qui se situe à un intervalle (13, 15) fonction de la vitesse devant le véhicule (10) de sorte que le temps entre deux interrogations de l'unité de commande puisse être augmenté à plus faible vitesse ou diminué à plus grande vitesse.

2. Procédé selon la revendication 1, dans lequel le véhicule (10) présente une bande de circulation gauche et une bande de circulation droite (34, 36) et comprend une valeur de hauteur à transmettre (H, G) par le serveur (20) au véhicule (10), respectivement une valeur de hauteur gauche (25) pour la bande de circulation gauche (34) et une valeur de hauteur droite (27) pour une bande de circulation droite (36) du véhicule (10).

3. Procédé selon la revendication 2, dans lequel une pluralité de valeurs de hauteur transmises (H, G) produit un profil de hauteur (h-34, h-36) pour respectivement la bande de circulation gauche et la bande de circulation droite (34, 36) du véhicule (10).

4. Procédé selon l'une quelconque des revendications précédentes, dans lequel les valeurs de hauteur transmises (H, G) sont délivrées à une unité de commande (32) du véhicule qui convertit les valeurs de hauteur (H, G) et adapte un mécanisme de roulement (30) du véhicule (10) au profil de hauteur (14) à attendre en conséquence.

5. Procédé selon la revendication 4, dans lequel on adapte les propriétés de stabilisation et/ou d'amortissement du véhicule (10) ou du mécanisme de roulement (30).

6. Procédé selon l'une quelconque des revendications précédentes, dans lequel le profil de hauteur parcouru (16) est détecté par le véhicule (10) et les valeurs de hauteur (f-34, f-36, F) sont transférées pour respectivement la bande de circulation gauche (34) et la bande de circulation droite (36) au serveur (20) extérieur au véhicule.

7. Procédé selon l'une quelconque des revendications précédentes, dans lequel le temps de cycle qui se situe entre deux interrogations au serveur (20) est adapté en fonction de la vitesse (18, 19) du véhicule (10).

8. Système de mécanisme de roulement (30) d'un véhicule (10) avec une unité de commande (32) qui est configurée en sorte d'envoyer dans un intervalle de temps à établir (13, 15), via une interface véhicule-serveur (12), des interrogations à un serveur (20) extérieur au véhicule, qui fournit les valeurs de hauteur (H, G) d'un profil de route (14) d'une route à parcourir par le véhicule (10), dans lequel les valeurs de hauteur (H, G) du profil de hauteur de route (14) se trouvant devant le véhicule (10) sont transmises de manière cyclique du serveur (20) au véhicule (10) dans l'intervalle de temps à établir (13, 15), dans lequel il est transféré par cycle une valeur de hauteur (H, G) qui se trouve dans un intervalle (13, 15) fonction de la vitesse devant le véhicule (10) de sorte que le temps entre deux interrogations de l'unité de commande au serveur puisse être augmenté à vitesse plus faible ou puisse être réduit à vitesse plus élevée.

9. Système de mécanisme de roulement (30) selon la revendication 8, dans lequel la valeur de hauteur (H, G) comprend respectivement une valeur de hauteur gauche (25) pour une bande de circulation gauche (34) et une valeur de hauteur droite (27) une bande de circulation droite (36).

10. Système de mécanisme de roulement (30) selon la revendication 8 ou 9, dans lequel l'unité de commande (32) est configurée de manière à convertir les valeurs de hauteur reçues (H, 25, 27) et à adapter en conséquence les propriétés de stabilisation et/ou d'amortissement du véhicule (30).

11. Système de mécanisme de roulement (30) selon l'une quelconque des revendications 8 à 10, qui présente pour chaque bande de roulement (34, 36) au moins un capteur (35, 37) qui sont configurés de manière à mesurer un profil de hauteur (16) parcouru par au moins un pneu (11) de la bande de roulement respective (34, 36) du véhicule (10) et à transmettre les valeurs de hauteur mesurées (f-34, f-36, F) au serveur (20).

12. Véhicule (10) équipé d'un système de mécanisme de roulement (30) des revendications 8 à 11, qui est conçu de manière à réaliser un procédé selon les revendications 1 à 7.
